# EUROPEAN PATENT SPECIFICATION

(11) **EP 3 641 112 B1**
(45) Date of publication and mention of the grant of the patent: **13.09.2023**
(21) Application number: 18817419.7
(22) Date of filing: 09.05.2018
(51) Int. Cl.: H02K 17/16

(54) **INDUCTION ELECTRIC MOTOR ROTOR**
ROTOR FÜR ELEKTRISCHEN INDUKTIONSMOTOR
ROTOR DE MOTEUR ÉLECTRIQUE À INDUCTION

(30) Priority: 16.06.2017 JP 2017118965
(43) Date of publication of application: 22.04.2020
(73) Proprietor: Kabushiki Kaisha Toshiba, Minato-ku Tokyo 105-8001 (JP); Toshiba Infrastructure Systems & Solutions Corporation, Kawasaki-shi, Kanagawa 212-0013 (JP)
(72) Inventor: MISU Daisuke, Tokyo 105-8001 (JP); MATSUSHITA Makoto, Tokyo 105-8001 (JP); TANIGUCHI Shun, Tokyo 105-8001 (JP); HASEBE Toshio, Tokyo 105-8001 (JP)
(74) Representative: AWA Sweden AB
(86) International application number: PCT/JP2018/017933
(87) International publication number: WO 2018/230201

(56) References cited:
- DE-B- 1 120 572
- JP-A- H01 209 940
- JP-A- H04 295 260
- JP-A- 2001 025 222
- JP-A- 2002 369 472
- JP-U- H01 105 363
- US-A- 4 064 410
- US-A1- 2011 249 528

## Description

### Technical Field

Embodiments described herein relate generally to a rotor of an induction electric motor.

### Background Art

As an induction electric motor, a squirrel-cage induction electric motor using a so-called squirrel-cage rotor is known. The squirrel-cage induction electric motor is composed of a stator in which a stator coil is arranged on a substantially cylindrical stator core having a plurality of stator slots, and a rotor which is located on the inside in the radial direction of the stator and is provided in a rotatable manner with respect to the stator.

The rotor comprises a rotary shaft which is rotatably provided around a rotation axis, and a rotor core which is externally fitted and fixed to the rotary shaft. A plurality of rotor teeth extending in a radial direction are radially arranged on the rotor core, and rotor slots are formed between the rotor teeth which are adjacent to each other in the circumferential direction. Conductor bars are inserted into the rotor slots, respectively.

In addition, there are two types of rotor slots: a semi-closed rotor slot, that is, a rotor slot which is open on the outer peripheral surface side of the rotor core, and a fully-closed rotor slot, that is, a rotor slot which is fully closed on the outer peripheral surface side of the rotor core. In the case of the fully-closed rotor slot, since a groove is not formed on the outer peripheral surface of the rotor core, cogging torque of the rotor can be reduced.

In this configuration, when the induction electric motor supplies current to the stator coil, induction current is generated in the conductor bar (secondary conductor) by magnetic flux generated on the primary side (stator side). Consequently, rotary toque is applied to the rotor.

Here, since the primary side has the stator slot for storing the stator coil and the secondary side has the rotor slot for storing the conductor bar, harmonic magnetic flux which does not contribute to the rotary torque of the rotor is generated. That is, the harmonic magnetic flux generates harmonic secondary current in the conductor bar located close to a minute gap between the stator and the rotor. The harmonic secondary current serves as a resistance at the time of generation of the induction current in the conductor bar, and causes a loss at the time of generation of the rotary torque in the rotor. The loss is called a harmonic secondary copper loss.

Generally, an inverter is used for driving an inductor motor. Since the current waveform of the inverter includes harmonics due to switching, temporal harmonic magnetic flux is generated. This harmonic magnetic flux is also a cause of the generation of harmonic secondary current.

In the fully-closed rotor slot in particular, the conductor bar is often formed by molding. In such a case, the conductor bar fills a portion close to the gap of the rotary slot. Therefore, the harmonic magnetic flux and the conductor bar may interlink with each other, and the harmonic secondary copper loss may increase.
Previous patent literature JP H01 209940 A discloses an iron core of a rotor in which a protrusion is provided in a direction of the slot in a closed portion on the outer peripheral side of the slot. Further, JP 2001 025222 A discloses a squirrel-cage rotor of an induction motor with an insulating layer placed between the slot portion and the conductor. US 4 064 410 A discloses a squirrel cage rotor having an improved end ring construction and an improved arrangement and method for securing rotor bars to the end ring. US 2011/249528 A1 discloses a mixer assembly's motor comprises a stator and a hybrid type rotor wherein the hybrid rotor includes a rotor core comprising an annular radially outer section of asynchronous type and an annular radially inner section of synchronous type arranged radially inside the annular radially outer section.

### Citation List

### Patent Literatures

Patent Literature 1: JP 2011-087373 A
Patent Literature 2: JP 5490251 B

### Summary of Invention

### Technical Problem

Embodiments described herein aim to provide a rotor of an induction electric motor which can reduce a harmonic secondary copper loss.

### Solution to Problem

According to the invention as defined in claim 1, a rotor of an induction electric motor includes a rotor core, rotor slots and conductor bars. The rotor core is rotatably provided around a rotation axis. The rotor slots are formed on an outer peripheral surface side of the rotor core, penetrates the rotor core in a rotation axis direction, and are arranged in a rotation direction. The conductor bars are inserted into the rotor slots, respectively. Each of the rotor slots comprises an inner slot and an outer slot. Each of the conductor bars is arranged in the inner slot. The outer slot is formed on an outside in a radial direction of the inner slot and communicates with the inner slot. The outer slot has such a shape that a width in the rotation direction gradually decreases toward the outside in the radial direction. A projection which projects from an inner surface toward an inside in the radial direction is provided on an outermost side in the radial direction of the outer slot. A length of the projection in the radial direction is set to be such a length that a distal end on the inside in the radial direction does not contact the conductor bar.

### Brief Description of Drawings

FIG. 1 is a cross-sectional view showing an induction electric motor of the first embodiment.
FIG. 2 is a plan view of a rotary core of the first embodiment when viewed in the axis direction.
FIG. 3 is an enlarged plan view showing a rotor slot of the first embodiment.
FIG. 4 is a distribution chart of main magnetic flux of a stator of the first embodiment.
FIG. 5 is a distribution chart of harmonic magnetic flux of the first embodiment.
FIG. 6 is an enlarged plan view showing a rotor slot of the second embodiment.
FIG. 7 is an enlarged plan view showing a rotor slot of the third embodiment.
FIG. 8 is an enlarged plan view showing a rotor slot of the fourth embodiment not belonging to the invention.
FIG. 9 is an enlarged plan view showing a rotor slot of the fifth embodiment not belonging to the invention.
FIG. 10 is an enlarged plan view showing a rotor slot of the sixth embodiment not belonging to the invention.

### Mode for Carrying Out the Invention

Rotors of induction electric motors of embodiments will be described with reference to the accompanying drawings. The invention is defined by the appended independent claim.

### (First Embodiment)

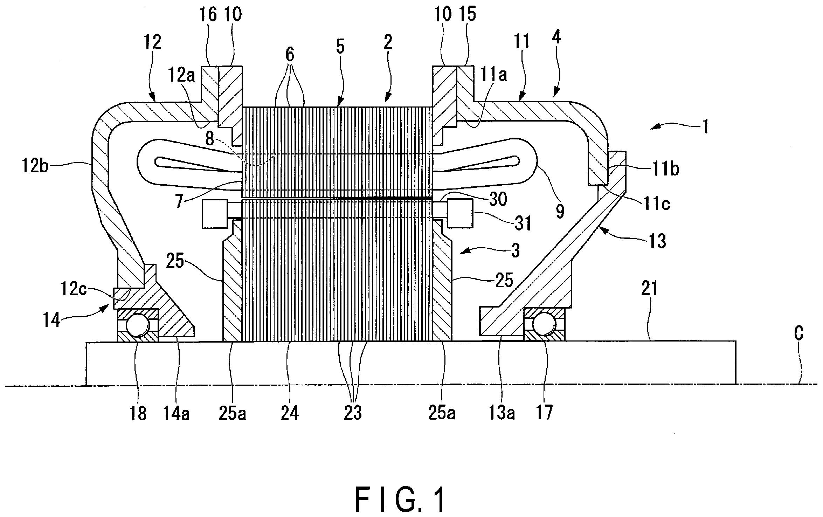

FIG. 1 is a cross-sectional view taken along a central axis C of an induction electric motor 1 and only shows a half of the induction electric motor 1 on one side of the central axis C.

As shown in FIG. 1, the induction electric motor 1 comprises a stator 2, a rotor 3 which is provided in a rotatable manner with respect to the stator 2, and a casing 4 which supports the stator 2 and the rotor 3. Note that the direction of the central axis C will be hereinafter referred to simply as an axis direction, the direction of rotation around the central axis C will be hereinafter referred to as a circumferential direction (rotation direction), and a direction orthogonal to the axis direction and the circumferential direction will be hereinafter referred to as a radial direction.

The stator 2 comprises a stator core 5 having a substantially cylindrical shape. The stator core 5 is formed by stacking a plurality of electromagnetic steel plates in the axis direction. The electromagnetic steel plates 6 are, for example, thin steel plates which are manufactured by adding silicon to iron.

In addition, a plurality of stator teeth 7 projecting toward the central axis C are formed on the inner peripheral surface side of the stator core 5. The stator teeth 7 are arranged at regular intervals in the circumferential direction.

Furthermore, stator slots 8 are formed between the stator teeth 7 which are adjacent to each other in the circumferential direction. Furthermore, a stator coil 9 is wound around each stator tooth 7 via each stator slot 8. The stator coil 9 is provided in such a manner that the stator coil 9 overhangs outward in the axis direction from both ends in the axis direction of the stator core 5. For example, DC power supplied from a wire via a pantograph (both not shown) is converted into AC power and is supplied to the stator coil 9.

In addition, stator core holders 10 are provided at both ends in the axis direction of the stator core 5. The stator core holders 10 hold the stacked electromagnetic steel plates 6 (stator core 5) such that the stacked electromagnetic plates 6 will not be separated from each other. The stator core holders 10 have a substantially ring shape and are formed of metal such as iron, and the outer diameter of the stator core holders 10 is set to be greater than the outer diameter of the stator core 5. In addition, the inner diameter of the stator core holders 10 is set to such an inner diameter that the stator core holders 10 and the stator coils 9 do not contact each other. The stator core 5 and the stator core holders 10 are integrated by welding, etc.

The casing 4 is composed of a pair of mirror covers 11 and 12 having a substantially bottomed cylindrical shape and arranged on both sides in the axis direction of the stator 2, and a pair of bearing brackets 13 and 14 which are integrated with the corresponding mirror covers 11 and 12.

The mirror covers 11 and 12 are arranged in such a state where openings 11a and 12a are directed toward the stator core 5, respectively. In addition, outer flange portions 15 and 16 are formed at the outer circumferential edges of the openings 11a and 12a of the mirror covers 11 and 12, respectively.

The outer diameters of the outer flange portions 15 and 16 are set to be substantially the same as the outer diameter of the stator core holders 10. Consequently, the stator core holders 10 and the outer flange portions 15 and 16 of the mirror covers 11 and 12 overlap in the axis direction. The stator core holders 10 and the outer flange portions 15 and 16 of the mirror covers 11 and 12 are fastened, respectively, by bolts and nuts (not shown). Consequently, the stator 2 is supported on the mirror covers 11 and 12.

Openings 11c and 12c are formed at the centers in the radial direction in bottom portions 11b and 12b of the mirror covers 11 and 12, respectively. The corresponding bearing brackets 13 and 14 are provided in such a manner that the corresponding bearing brackets 13 and 14 close the openings 11c and 12c, respectively. The bearing brackets 13 and 14 are integrated with the corresponding mirror covers 11 and 12, respectively.

Each of the bearing brackets 13 and 14 has a substantially truncated cone shape, and is arranged in such a manner that each of the bearing brackets 13 and 14 projects toward the stator 2. At the centers in the radial direction of the bearing brackets 13 and 14, insertion holes 13a and 14a into which a rotary shaft 21 which will be described later can be inserted are formed in a penetrating manner in the axis direction, respectively.

In addition, bearing storage portions 13b and 14b are formed in a recessed manner on the outer sides in the axis direction at the centers in the radial direction of the bearing brackets 13 and 14, respectively. Bearings 17 and 18 are provided in the bearing storage portions 13b and 14b, respectively. The rotary shaft 21 is rotatably supported on the bearing brackets 13 and 14 via the bearings 17 and 18. The casing 4 is fixed, for example, under the floor of a train vehicle (both not shown).

The rotor 3 comprises the rotary shaft 21 which is supported in a rotatable manner around the central axis C by the casing 4. A rotor core 22 having a substantially columnar shape is externally fitted and fixed at a position corresponding to the stator 2 of the rotary shaft 21. The outer diameter of the rotary core 22 is set to such an outer diameter that a minute gap is formed between an outer peripheral surface 22a of the rotor core 22 and the stator teeth 7 of the stator 2. The minute gap should preferably be as small as possible.

The rotor core 22 is also formed by stacking a plurality of electromagnetic steel plates 23 in the axis direction. In addition, a through hole 24 into which the rotary shaft 21 can be inserted or press-fitted is formed in a penetrating manner over the entire length in the axis direction at the center in the radial direction of the rotor core 22, and the rotary shaft 21 and the rotor core 22 rotate in an integrated manner. In a case where the rotary shaft 21 is inserted into the rotor core 22, the rotor shaft 21 is integrated with the rotor core 22 by press-fitting, an adhesive or the like.

Furthermore, rotor core holders 25 having a substantially disk shape are provided at both ends in the axis direction of the rotor core 22. The rotor core holders 25 are also formed of metal such as iron, and through holes 25a into which the rotary shaft 21 can be inserted or press-fitted are formed at the centers in the radial direction of the rotor core holders 25, respectively.

The rotor core holders 25 configured as described above have the function of holding the stacked electromagnetic steel plates 23 (rotor core 22) such that the stacked electromagnetic steel plates 23 will not be separated from each other or deviated in the axis direction from the rotary shaft 21.

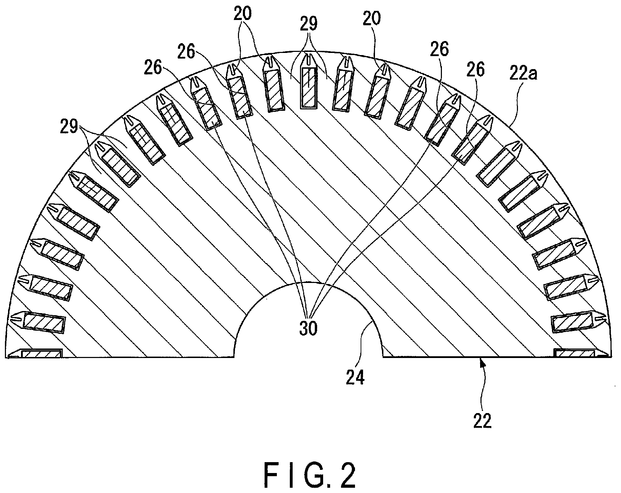

FIG. 2 is a plan view of the rotor core 22 when viewed in the axis direction.

As shown in the drawing, on the outer peripheral surface 22a side of the rotor core 22, a plurality of rotor slots 26 are formed in a penetrating manner in the axis direction and are arranged in the circumferential direction. The rotor slots 26 are the so-called fully-closed slots which are not open on the outer peripheral surface 22a side of the rotor core 22.

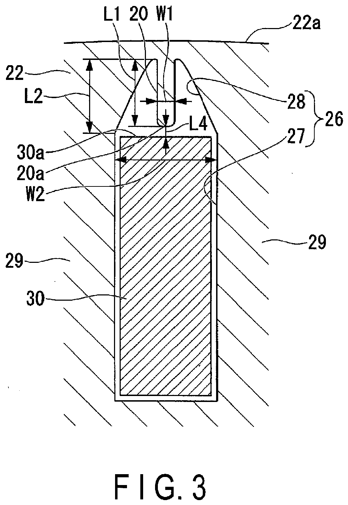

FIG. 3 is an enlarged plan view of the rotor slot 26.

As shown in the drawing, the rotor slot 26 is composed of an inner slot 27 having a substantially rectangular shape which is long in the radial direction when viewed in the axis direction, and an outer slot 28 provided on the outside in the radial direction of the inner slot 27 and communicating with the inner slot 27.

The outer slot 28 has a substantially triangular shape when viewed in the axis direction such that the width in the circumferential direction gradually decreases toward the outside in the radial direction (the outer peripheral surface 22a of the rotor core 22). In addition, the width in the circumferential direction on the inner slot 27 side of the outer slot 28 is set to be the same as the width in the circumferential direction of the inner slot 27.

Furthermore, at an apex on the outermost side in the radial direction of the outer slot 28, a projection 20 which projects inward in the radial direction from the apex is integrally formed.

The projection 20 has a substantially rectangular shape which is long in the radial direction when viewed in the axis direction. A length L1 in the radial direction of the projection 20 is set to be slightly less than a length L2 in the radial direction of the outer side slot 28. In addition, a width W1 in the circumferential direction of the projection 20 is set to be less than one third of a width W2 in the circumferential direction of the inner slot 27 which will be described later (the width in the circumferential direction of a conductor bar 30 which will be described later).

In the rotor core 22 configured as described above, portions between the rotor slots 26 which are adjacent to each other in the circumferential direction are constituted as rotor teeth 29. That is, in the case of the fully-closed rotor slots 26 of the first embodiment, the outer sides in the radial direction of the rotor teeth 29 which are adjacent to each other in the circumferential direction are connected to each other. Interlinkage magnetic flux generated in the stator 2 flows through the rotor teeth 29.

Conductor bars 30 are inserted in the inner slots 27, respectively. The conductor bar 30 is formed of a conductive and nonmagnetic material such as copper or aluminum. In addition, the conductor bar 30 is formed in conformity with the shape of the inner slot 27, and the cross-sectional shape in the direction orthogonal to the axis direction is a substantially rectangular shape which is long in the radial direction. Furthermore, the conductor bar 30 has such a size that the cross-sectional area becomes slightly smaller than the opening area of the inner slot 27. In a state where the conductor bar 30 is inserted in the inner slot 27, a minute clearance is formed between the conductor bar 30 and the inner slot 27. Therefore, the width in the circumferential direction of the conductor bar 30 is substantially the same as the width in the circumferential direction of the inner slot 27.

In addition, the conductor bar 30 inserted in the inner slot 27 is fixed inside the inner slot 27 by swaging, an adhesive or the like.

Here, the length L1 in the radial direction of the projection 20 formed in the outer slot 28 is set to be slightly less than the length L2 in the radial direction of the outer slot 28. That is, the projection 20 is formed in such a manner that a distal end 20a on the inside in the radial direction will be located right in front of the inner slot 27 (the conductor bar 30). Therefore, the projection 20 does not contact the conductor bar 30.

In addition, as shown in FIG. 1, the length in the axis direction of the conductor bar 30 is set to be greater than the length in the axis direction of the rotor core 22. Therefore, in a state where the conductor bar 30 is inserted in the rotor slot 26 (the inner slot 27) of the rotor core 22, both ends in the axis direction of the conductor bar 30 project from both ends in the axis direction of the rotor core 22. At both ends in the axis direction of the conductor bar 30 projecting from the rotor core 22, short-circuit rings 31 having a substantially ring shape are provided, respectively. The conductor bars 30 are connected by these short-circuit rings 31.

Next, the function of the rotor slots 26 of the rotor core 22 will be described.

First, the operation of the induction electric motor 1 will be described.

To operate the induction electric motor 1, power is supplied to the stator coils 9. When power is supplied to the star coils 9, magnetic flux (hereinafter referred to as main magnetic flux) is formed in the stator core 5. The main magnetic flux flows through the rotor teeth 29 via the stator teeth 7. In addition, since the conductor bars 30 are inserted in the rotor slots 26, the main magnetic flux of the stator 2 interlinks with the rotor slots 26, and when the main magnetic flux changes, secondary current is generated in the conductor bars 30. Rotary torque is generated in the rotor 3 by the secondary current and the magnetic flux of the stator 2.

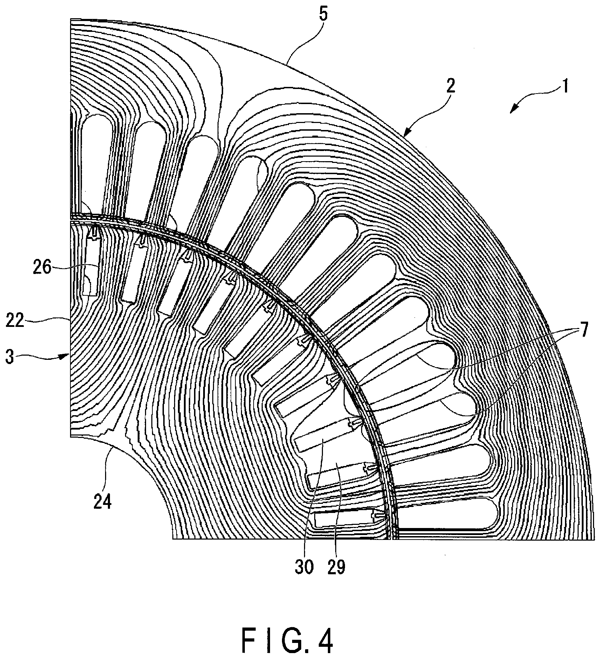

FIG. 4 is a distribution chart of the main magnetic flux of the stator 2.

As shown in the drawing, the main magnetic flux of the stator 2 flows deep into the inner side in the radial direction of the rotor core 22 via the rotor teeth 29. That is, the main magnetic flux of the stator 2 flows substantially in the radial direction inside the rotor teeth 29.

Here, the outer slot 28 of the rotor slot 26 has a substantially triangular shape when viewed in the axis direction such that the width in the circumferential direction gradually decreases toward the outside in the radial direction (the outer peripheral surface 22a of the rotor core 22). Therefore, the main magnetic flux of the stator 2 is smoothly guided toward the inner sides in the radial direction of the rotor teeth 29 along the outer slots 28. As a result, the flow of the main magnetic flux will not be concentrated on a part (corner) of the conductor bar 30 arranged in the inner slot 27.

In addition, even though the projection 20 is provided in the outer slot 28, since the width W1 in the circumferential direction of the projection 20 is set to be less than one third of the width W2 in the circumferential direction of the outer slot 28 (the width in the circumferential direction of the inner slot 27), the main magnetic flux of the stator 2 easily saturates. Consequently, the flow of the main magnetic flux is hardly inhibited by the projection 20.

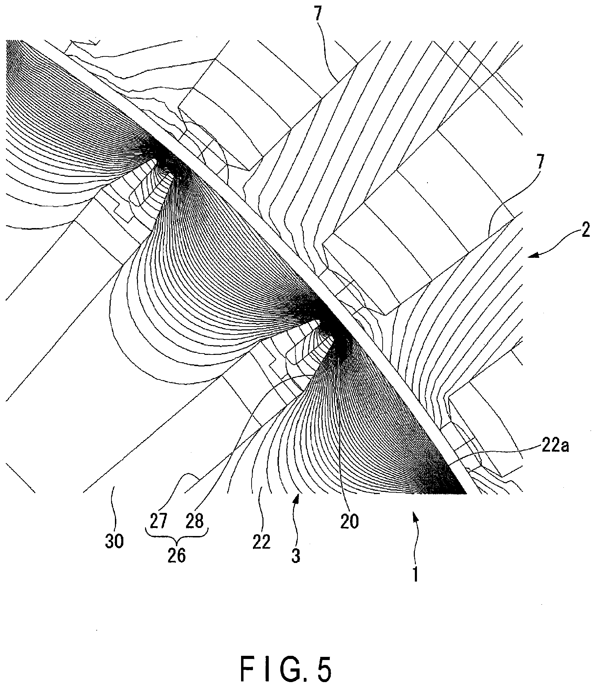

FIG. 5 is a distribution chart of harmonic magnetic flux.

As shown in the drawing, in addition to the main magnetic flux of the stator 2, harmonic magnetic flux is also generated in the rotor core 22 due to the influence of the rotor slot 26 as described above. Since the harmonic magnetic flux is generated near the minute gap between the stator 2 and the rotor 3, the harmonic magnetic flux flows in such a manner that the harmonic magnetic flux passes through the rotor slot 26 in the circumferential direction.

Here, the projection 20 extends in the radial direction in the outer slot 28 of the rotor slot 26. That is, the projection 20 is provided in such a manner that the projection 20 blocks the flow of the harmonic magnetic flux passing through the outer slot 28 in the circumferential direction. Therefore, the harmonic magnetic flux is concentrated on the projection 20. Consequently, the harmonic magnetic flux passing through the conductor bar 30 in the circumferential direction is reduced.

Therefore, according to the above-described first embodiment, since the projection 20 is provided in the outer slot 28 of the rotor slot 26, the generation of the harmonic secondary current in the conductor bar 30 can be suppressed. Consequently, the harmonic secondary copper loss of the induction electric motor 1 can be reduced.

In addition, the width W1 in the circumferential direction of the projection 20 is set to be less than one third of the width W2 in the circumferential direction of the outer slot 28 (the width in the circumferential direction of the inner slot 27). Therefore, the main magnetic flux of the stator 2 saturates, and the flow of the main magnetic flux is hardly inhibited by the projection 20. Furthermore, the outer slot 28 has a substantially triangular shape when viewed in the axis direction such that the width in the circumferential direction gradually decreases toward the outside in the radial direction (the outer peripheral surface 22a of the rotor core 22). Therefore, the main magnetic flux of the stator 2 is smoothly guided toward the inner sides in the radial direction of the rotor teeth 29 along the outer slots 28, respectively, and the flow of the main magnetic flux will not be concentrated on parts (corners) of the conductor bars 30 arranged in the inner slots 27, respectively. Consequently, the main magnetic flux of the stator 2 can contribute to the rotary torque of the rotor 3 more efficiently, and the highly efficient induction electric motor 1 can be provided.

In addition, the length L1 in the radial direction of the projection 20 is set to be slightly less than the length L2 in the radial direction of the outer slot 28. Therefore, it is possible to prevent the projection 20 from contacting the conductor bar 30. Consequently, leakage of magnetic flux due to the generation of induction current in the conductor bar 30 into the projection 20 can be prevented, and the rotary torque can be more efficiently added to the rotor 3.

Here, as the harmonic magnetic flux passes through the projection 20, eddy current is induced near an end surface 30a on the outside in the radial direction of the conductor bar 30. However, since a predetermined gap is formed between the end surface 30a of the conductor bar 30 and the projection 20, the eddy current inducted near the end surface 30a of the conductor bar 30 can also be reduced. As a result, the harmonic secondary copper loss of the induction electric motor 1 can be more reliably reduced.

### (Second Embodiment)

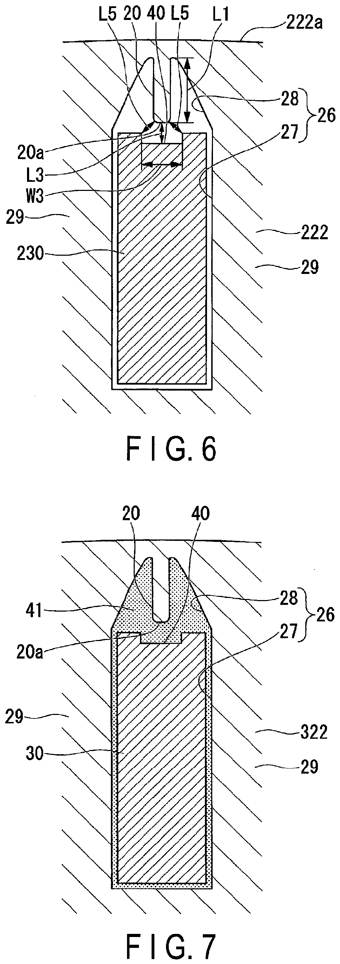

Next, the second embodiment will be described with reference to FIG. 6.

FIG. 6 is an enlarged plan view of the rotary slot 26 of a rotary core 222 in the second embodiment and corresponds to above-described FIG. 3. Note that the same constituent elements as those of the above-described first embodiment will be denoted by the same reference numbers and detailed descriptions will be omitted (the same applies to the subsequent embodiments).

In the present second embodiment, regarding the basic configuration of the rotor core 222, the present second embodiment is the same as the above-described first embodiment in that the rotor core 222 is used in the rotor 3 which constitutes the induction electric motor 1 together with the stator 2, the casing 4 and the like shown in FIG. 1, the rotor slots 26 are formed in a penetrating manner in the axis direction and are arranged in the circumferential direction on an outer peripheral surface 222a side of the rotor core 222, and conductor bars 230 are inserted in the inner slots 27 of the rotor slots 26 (the same applies to the subsequent embodiments).

Here, the difference between the above-described first embodiment and the present second embodiment is the difference between the shape of the conductor bar 30 of the first embodiment and the shape of the conductor bar 230 of the second embodiment.

More specifically, as shown in FIG. 6, a recess 40 is formed at a position facing the projection in the radial direction on an end surface 230a on the outside in the radial direction of the conductor bar 230. Since the recess 40 is formed, a distance L3 between the conductor bar 230 and the distal end 20a on the inside in the radial direction of the projection 20 which face each other in the radical direction is greater than a distance L4 (see FIG. 3) between the conductor bar 30 and the distal end 20a of the projection 20 in the above-described first embodiment.

Further, a width W3 in the circumferential direction of the recess 40 is set to such a width that a distance L5 between a corner of the recess 40 and a corner of the distal end 20a of the projection 20 becomes substantially the same as the above-described distance L3.

According to this configuration, even though the length L1 in the radial direction of the projection 20 is not reduced as compared to the above-described first embodiment, the distance (distances L3 and L5) between the projection 20 and the conductor bar 230 can be secured as much as possible.

Here, it is preferable that the length L1 in the radial direction of the projection 20 should be increased as much as possible and the flow of the harmonic magnetic flux passing through the outer slot 28 in the circumferential direction should be blocked. On the other hand, as the length L1 in the radial direction of the projection 20 is increased, the distance between the projection 20 and the conductor bar 230 is reduced. Consequently, the magnetic flux due to the generation of the induction current in the conductor bar 230 may leak into the projection 20.

However, as the recess 40 is formed in the conductor bar 230, the distance (distances L3 and L5) between the projection 20 and the conductor bar 230 can be secured as much as possible, and the leakage of the magnetic flux of the conductor bar 230 into the projection 20 can be reliably suppressed. In addition, the induction of the eddy current in the conductor bar 230 due to the leakage can also be suppressed. Therefore, the induction electric motor 1 which can operate even more efficiently can be provided.

Furthermore, since the recess 40 is formed in the conductor bar 230, for example, even if the conductor bar 230 is displaced outward in the radial direction due to the centrifugal force applied to the conductor bar 230 at the time when the rotor core 222 rotates, the contact between the conductor bar 230 and the projection 20 can be reliably prevented.

### (Third Embodiment)

Next, the third embodiment will be described with reference to FIG. 7.

FIG. 7 is an enlarged plan view of the rotor slot 26 of a rotor core 322 in the third embodiment and corresponds to above-described FIG. 3.

As shown in the drawing, in the third embodiment, the rotor slot 26 of the above-described second embodiment is filled with a nonconductive material 41. The third embodiment differs from the above-described second embodiment in this point.

The nonconductive material 41 is formed of, for example, resin. It is possible to firmly fix the conductor bar 230 inside the rotor slot 26 by filling the rotor slot 26 with the nonconductive material 41.

In the above-described first, second and third embodiments, a case where the width W1 in the circumferential of the projection 20 provided in the outer slot 28 is set to be less than one third of the width W2 in the circumferential direction of the inner slot 27 (the width in the circumferential direction of the conductor bar 30) has been described. However, the present invention is not limited to this case, and the width W1 in the circumferential direction of the projection 20 may be set to be greater than one third of the width in the circumferential direction of the inner slot 27 (the width in the circumferential direction of the conductor bar 30). However, the width W1 of the projection 20 should preferably be set to such a width that the main magnetic flux of the stator 2 saturates in the projection 20.

### (Fourth Embodiment)

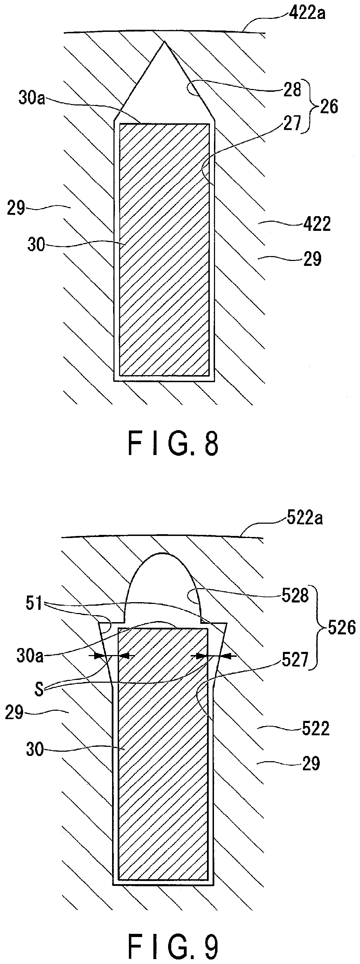

Next, the fourth embodiment not belonging to the invention will be described with reference to FIG. 8.

FIG. 8 is an enlarged plan view of the rotor slot 26 of a rotor core 422 in the fourth embodiment and corresponds to above-described FIG. 3.

As shown in the drawing, the present fourth embodiment differs from the above-described first embodiment in that, while the projection 20 is provided in the outer slot 28 in the above-described first embodiment, the projection 20 is not provided in the outer slot 28 in the present fourth embodiment.

In this configuration also, since the outer slot 28 is provided, as compared to a case where the outer slot 28 is not provided, the harmonic magnetic flux is less likely to pass in the circumferential direction on an outer peripheral surface 442a side of the rotor core 422. Therefore, according to the above-described fourth embodiment, the same effects as those of the above-described first embodiment can be produced.

### (Fifth Embodiment)

Next, the fifth embodiment not belonging to the invention will be described with reference to FIG. 9. FIG. 9 is an enlarged plan view of a rotor slot 526 of a rotor core 522 in the fifth embodiment and corresponds to above-described FIG. 3.

As shown in the drawing, the difference between the above-described first embodiment and the present fifth embodiment is the difference between the shape of the rotor slot 26 of the above-described first embodiment and the shape of the rotor slot 526 of the present fifth embodiment.

More specifically, the rotor slot 526 is composed of an inner slot 527 having a substantially rectangular shape which is long in the radial direction when viewed in the axis direction, and an outer slot 528 formed on the outside in the radial direction of the inner slot 527 and communicating with the inner slot 527.

In the inner slot 527, subslots 51 are formed in a range of about one fourth of the length in the radial direction of the inner slot 527 from the outermost side in the radial direction. The subslots 51 are formed on both sides in the circumferential direction of the inner slot 527 and communicate with the inner slot 527. In addition, each subslot 51 has such a shape that the width in the circumferential direction gradually increases toward the outside in the radial direction (the outer slot 528 side). Therefore, a space S between the conductor bar 30 inserted in the inner slot 527 and each subslot 51 gradually increases toward the outside in the radial direction.

On the other hand, the outer slot 528 has a substantially semielliptical shape when viewed in the axis direction such that the width in the circumferential direction gradually decreases toward the outside in the radial direction (an outer peripheral surface 552a of the rotor core 522). In addition, the width in the circumferential direction on the inner slot 527 side of the outer slot 528 is set to be slightly less than the width in the circumferential direction of a portion of the inner slot 527 in which the subslots 51 are not formed.

Consequently, in a case where the outer slot 528 has a substantially semielliptical shape also, the same effects as those of the above-described first embodiment can be produced.

Here, the harmonic magnetic flux is more likely to pass through a portion close to the end surface 30a on the outside in the radial direction of the conductor bar 30 as compared to a portion close to the center in the radial direction of the conductor bar 30 (see FIG. 5). However, in the present fifth embodiment, the subslots 51 are formed near the end surface 30a of the conductor bar 30. Therefore, the subslots 51 prevent the harmonic magnetic flux from passing through the portion close to the end surface 30a of the conductor bar 30 in the circumferential direction. In addition, since the space S is formed between the conductor bar 30 and each subslot 51, the induction of the eddy current near the end surface 30a of the conductor bar 30 can be suppressed. As a result, the harmonic secondary copper loss of the induction electric motor 1 can be more reliably reduced.

### (Sixth Embodiment)

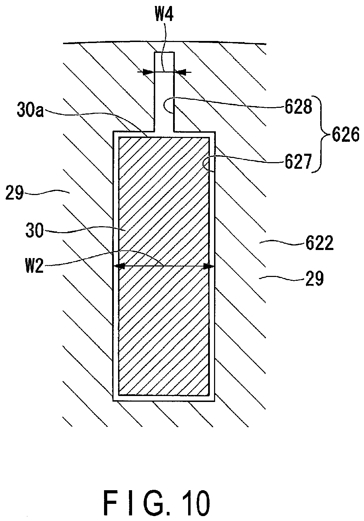

Next, the sixth embodiment not belonging to the invention will be described with reference to FIG. 10.

FIG. 10 is an enlarged plan view of a rotor slot 626 of a rotor core 622 in the sixth embodiment and corresponds to above-described FIG. 3.

As shown in the drawing, the difference between the above-described first embodiment and the present sixth embodiment is the difference between the shape of the outer slot 28 of the above-described first embodiment and the shape of the outer slot 628 of the present sixth embodiment.

More specifically, the outer slot 628 in the sixth embodiment has a substantially rectangular shape which is long in the radial direction. This example does not form part of the present invention. That is, a width W4 in the circumferential direction of the outer slot 628 is set to be a uniform width over the entire length in the radial direction. In addition, the width W4 in the circumferential direction of the outer slot 628 is set to be about one third of the width W2 in the circumferential direction of the inner slot 27 (approximate to the width in the circumferential direction of the conductor bar 30).

In this configuration also, since the width W4 in the circumferential direction of the outer slot 628 is less than a width W5 in the circumferential direction of the inner slot 27, the same effects as those of the above-described first embodiment can be produced.

In the present sixth embodiment, a case where the width W4 in the circumferential direction of the outer slot 628 is set to be about one third of the width W5 in the circumferential direction of the inner slot 27 has been described. However, the width W4 in the circumferential direction of the outer slot 628 only needs to be less than the width W5 in the circumferential direction of the inner slot 27.

Although the rotor slots 26, 526 and 626 of various shapes and the conductor bars 30 and 230 of various shapes have been described in the embodiments, the rotor slots 26, 526 and 626 and the conductor bars 30 and 230 can be appropriately combined with each other. For example, the outer slot 528 of the fifth embodiment may be formed into a substantially rectangular shape when viewed in the axis direction, as is the case with the outer slot 28 of the first embodiment. Alternatively, the outer slot 28 of the first embodiment may be formed into a substantially semielliptical shape when viewed in the axis direction, as is the case with the outer slot 528 of the fifth embodiment.

In the above-described third embodiment, a case where the rotor slot 26 is filled with the nonconductive material 41 has been described. The rotor slots 26, 526 and 626 of the other embodiments may be filled with the nonconductive material 41.

According to at least one of the above-described embodiments, the rotor slot 26, 526, 626 formed in the rotor core 22, 222, 322, 422, 522, 622 is composed of the inner slot 27, 527 into which the conductor bar 30, 230 is inserted, and the outer slot 28, 528, 628 formed on the outside in the radial direction of the inner slot 27, 527 and communicating with the inner slot 27, 527, and harmonic magnetic flux passing through the conductor bar 30, 230 in the circumferential direction can thereby be reduced. Therefore, generation of harmonic secondary current in the conductor bar 30, 230 can be suppressed, and a harmonic secondary copper loss of the induction electric motor 1 can be reduced. In addition, generation of eddy current near the end surface 30a, 32a on the outside in the radial direction of the conductor bar 30, 230 can be suppressed.

## Claims

1. A rotor (3) for an induction electric motor (1) comprising:
a rotor core (22) rotatably provided around a rotation axis;
a plurality of rotor slots (26) formed on an outer peripheral surface side of the rotor core (22), penetrating the rotor core (22) in a rotation axis direction, and arranged in a rotation direction; and
a plurality of conductor bars (30) inserted into the rotor slots (26), respectively, wherein
each of the rotor slots (26) comprises:
an inner slot (27) in which the conductor bar (30) is arranged; and
an outer slot (28) formed on an outside in a radial direction of the inner slot and communicating with the inner slot (26),
the outer slot (28) has such a shape that a width in the rotation direction gradually decreases toward the outside in the radial direction,
a projection (20) which projects from an inner surface toward an inside in the radial direction is provided on an outermost side in the radial direction of the outer slot (28),
**characterized in that**
a length of the projection (20) in the radial direction is set to be such a length that a distal end on the inside in the radial direction does not contact the conductor bar (30).

2. The rotor (3) of claim 1, wherein
a cross-sectional shape in a direction orthogonal to the rotation axis of the projection (20) is a substantially rectangular shape which is long in the radial direction, and a distal end on the inside in the radial direction of the projection (20) extends to a position close to the conductor bar (30), and
a width in the rotation direction of the projection (20) is set to be one third of a width in the rotation direction of the conductor bar (30).

3. The rotor (3) (1) of one of claims 1 and 2, wherein a recess is formed in a portion facing the projection (20) in the radial direction on an end surface on the outside in the radial direction of the conductor bar (30).

4. The rotor (3) of any one of claims 1 to 3, wherein a portion other than a portion in which the conductor bar (30) is provided of the rotor slot is filled with a nonconductive material.

## Patentansprüche

1. Rotor (3) für einen elektrischen Induktionsmotor (1), der Folgendes umfasst:
einen Rotorkern (22), der um eine Drehachse drehbar bereitgestellt ist;
mehrere Rotornuten (26), die an einer äußeren Umfangsflächenseite des Rotorkerns (22) gebildet sind, in einer Drehachsenrichtung in den Rotorkern (22) eindringen und in einer Drehrichtung angeordnet sind; und
mehrere Leiterschienen (30), die jeweils in die Rotornuten (26) eingeführt sind, wobei
jede der Rotornuten (26) Folgendes umfasst:
eine innere Nut (27), in der die Leiterschiene (30) angeordnet ist; und
eine äußere Nut (28), die an einer Außenseite in einer radialen Richtung der inneren Nut gebildet ist und mit der inneren Nut (26) verbunden ist,
wobei die äußere Nut (28) eine Form aufweist, die derart ist, dass eine Breite in der Drehrichtung hin zur Außenseite in der radialen Richtung allmählich abnimmt,
einen Vorsprung (20), der von einer inneren Fläche hin zu einer Innenseite in der radialen Richtung hervorsteht, an einer äußersten Seite in der radialen Richtung der äußeren Nut (28) bereitgestellt ist,
**dadurch gekennzeichnet, dass**
eine Länge des Vorsprungs (20) in der radialen Richtung eingestellt ist, um eine derartige Länge zu sein, dass ein distales Ende an der Innenseite in der radialen Richtung die Leiterschiene (30) nicht kontaktiert.

2. Rotor (3) nach Anspruch 1, wobei
eine Querschnittsform in einer Richtung orthogonal zur Drehachse des Vorsprungs (20) eine im Wesentlichen rechtwinklige Form ist, die in der radialen Richtung lang ist und ein distales Ende an der Innenseite in der radialen Richtung des Vorsprungs (20) sich zu einer Position nahe an der Leiterschiene (30) erstreckt, und
eine Breite in der Drehrichtung des Vorsprungs (20) eingestellt ist, um ein Drittel einer Breite in der Drehrichtung der Leiterschiene (30) zu betragen.

3. Rotor (3) nach einem der Ansprüche 1 und 2, wobei eine Vertiefung in einem Abschnitt gebildet ist, der dem Vorsprung (20) in der radialen Richtung an einer Endfläche an der Außenseite in der radialen Richtung der Leiterschiene (30) zugewandt ist.

4. Rotor (3) nach einem der Ansprüche 1 bis 3, wobei ein Abschnitt, der sich von einem Abschnitt unterscheidet, in dem die Leiterschiene (30) der Rotornut bereitgestellt ist, mit einem nicht leitfähigen Material gefüllt ist.

## Revendications

1. Rotor (3) pour un moteur électrique à induction (1) comprenant :
un noyau de rotor (22) prévu de manière à pouvoir tourner autour d'un axe de rotation ;
une pluralité de fentes de rotor (26) formées sur un côté de surface périphérique extérieure du noyau de rotor (22), pénétrant le noyau de rotor (22) dans une direction d'axe de rotation, et agencées dans une direction de rotation ; et
une pluralité de barres conductrices (30) insérées respectivement dans les fentes de rotor (26), dans lequel
chacune des fentes de rotor (26) comprend :
une fente intérieure (27) dans laquelle la barre conductrice (30) est agencée ; et
une fente extérieure (28) formée sur un extérieur dans une direction radiale de la fente intérieure et communiquant avec la fente intérieure (26),
la fente extérieure (28) présente une forme telle qu'une largeur dans la direction de rotation diminue progressivement vers l'extérieur dans la direction radiale,
une saillie (20) saillante depuis une surface intérieure vers un intérieur dans la direction radiale est prévue sur un côté le plus extérieur dans la direction radiale de la fente extérieure (28),
**caractérisé en ce que**
une longueur de la saillie (20) dans la direction radiale est réglée pour être telle qu'une extrémité distale sur l'intérieur dans la direction radiale ne soit pas en contact avec la barre conductrice (30).

2. Rotor (3) selon la revendication 1, dans lequel
une forme en coupe transversale dans une direction orthogonale à l'axe de rotation de la saillie (20) est une forme sensiblement rectangulaire qui est longue dans la direction radiale, et une extrémité distale sur l'intérieur dans la direction radiale de la saillie (20) s'étend jusqu'à une position à proximité de la barre conductrice (30), et
une largeur dans la direction de rotation de la saillie (20) est réglée pour être un tiers d'une largeur dans la direction de rotation de la barre conductrice (30).

3. Rotor (3) selon la revendication 1 ou 2, dans lequel un évidement est formé dans une partie faisant face à la saillie (20) dans la direction radiale sur une surface d'extrémité sur l'extérieur dans la direction radiale de la barre conductrice (30).

4. Rotor (3) selon l'une quelconque des revendications 1 à 3, dans lequel une partie autre qu'une partie dans laquelle la barre conductrice (30) est pourvue de la fente de rotor est remplie d'un matériau non conducteur.
